# EUROPEAN PATENT SPECIFICATION

(11) **EP 0 684 873 B1**
(45) Date of publication and mention of the grant of the patent: **28.04.1999**
(21) Application number: 95903369.7
(22) Date of filing: 19.12.1994
(51) Int. Cl.: B01J 23/63, B01J 23/10, B01D 53/94

(54) **CATALYST FOR THE PURIFICATION OF GASOLINE ENGINE EXHAUST GASES AND METHOD FOR THE PREPARATION OF THE SAME**
KATALYSATOR FÜR DIE REINIGUNG VON ABGASEN AUS BENZINMOTOREN UND METHODE ZUR DESSEN HERSTELLUNG
CATALYSEUR POUR LA PURIFICATION DES GAZ D'ECHAPPEMENT DE MOTEUR A ESSENCE ET PROCEDE POUR SA PREPARATION

(30) Priority: 20.12.1993 FI 935750
(43) Date of publication of application: 06.12.1995
(73) Proprietor: KEMIRA OY, SF-02271 Espoo (FI)
(72) Inventor: HÄRKÖNEN, Matti, FIN-90570 Oulu (FI); KIVIOJA, Matti, FIN-90540 Oulu (FI); MAUNULA, Teuvo, FIN-90650 Oulu (FI); SLOTTE, Thomas, FIN-90550 Oulu (FI)
(74) Representative: Allard, Susan Joyce
(86) International application number: FI9400573
(87) International publication number: WO9517249

(56) References cited:
- EP-A- 0 310 398
- EP-A- 0 488 250
- GB-A- 1 398 893
- US-A- 4 808 564

## Description

The present invention relates to a catalyst for the purification of gasoline engine exhaust gases and to a method for the preparation of the same.

Gasoline engine exhaust gases contain detrimental compounds, such as carbon monoxide and hydrocarbons and nitrogen oxides which have not burned or which have burned incompletely in the engine. In a number of countries, public authorities have imposed emission standards on exhaust gases, and for reasons of environmental protection the standards are generally becoming stricter. Catalysts purifying exhaust gases have already for a relatively long time been installed in automobiles. Since the standards are becoming stricter, there is also need for developing more effective catalysts alongside the continued development of less polluting engines.

In the course of long development, gasoline engine catalysts have generally taken the shape of a structure in which the walls of a ceramic or metal-body pipe system made up of a large number of parallel through-flow channels or holes are coated with an active mixture, i.e. a support (also called washcoat). The support in general contains active alumina (gamma-alumina), having a large specific surface area, and ceria. The purpose of the ceria is to stabilize the alumina against phase transitions, and to store oxygen during the oxygen-rich stage and to yield it during the oxygen-poor stage as the oxygen content of the exhaust gas entering the catalyst varies owing to the pulsation caused by the engine. In this case the concentration of oxygen required for the catalytic reactions varies on both sides of the stoichiometric concentration. In addition, the support may contain several additives, either to promote the catalytic reactions (promoters) or to stabilize the tendencies of the support or the noble metals to change, for example at high temperatures (stabilizers).

The noble metals are adsorbed to the surface of the support layer applied and calcined onto the body surface in such a manner that the noble metals are in the form of very small particles and well dispersed on the surface of support pores forming a large specific surface. The noble metals may also be added to the support before the coating. Platinum and rhodium are commonly utilized noble metals, their total amount being in general approximately 1.5 - 2 g/l of catalyst honeycomb, and their average platinum:rhodium ratio being in general 5:1.

The efficacy of a catalyst is in general improved when the noble metal surface in the catalyst is increased. This often also requires an increasing of the noble metal amount. In this, however, the high price of noble metals often constitutes a limiting factor.

Therefore there has been a need to develop less expensive catalysts which are at the same time sufficiently effective. It is known to use as the noble metal palladium, which is considerably less expensive than the above-mentioned platinum and rhodium. On the other hand, in the use of palladium it has been found that a catalyst having as good a performance as the platinum-rhodium catalyst has not been obtained with the use of palladium. Efforts have been made to eliminate this problem by using a higher amount of palladium, up to 12 g/l. In this there has been the problem that the stability of palladium is lower than that of platinum and rhodium in the conditions of gasoline engine exhaust gas. This is seen especially in the change of the oxidation state of palladium or poisoning, whereafter it is not in a form as active to purify gasoline engine exhaust gases as was originally intended.

In one system, disclosed in EP application publication 0430437A2, an attempt has been made to improve the stability of palladium by precipitating lanthanum oxide and titanium oxide in connection with palladium on the surface of the support, the aim being to produce non-continuous deposits of noble metal and additive on the surface of the support (alumina). The amount of palladium in the support was 1 % (= approx. 1.8 g/l of catalyst). Since by the procedure of this invention the entire catalyst surface will not be exploited, such an arrangement will not provide the best possible catalytic performance.

Japanese patent application JP-3 052 642 discloses a system wherein lanthanum aluminate (LaAlO₃₎ is added as a stabilizer to an alumina + palladium catalyst. The preparation thereof has to be carried out at a high temperature, thus being time-consuming and increasing costs. Additionally the product has to be separately ground prior to the addition to the support and even then the specific surface area thereof remains low.

Japanese patent application JP-60 081 419 discloses, among others, a system in which the catalyst consists of palladium which is on the surface of alumina, to which catalyst there has been added lanthanum oxide as a stabilizer. In this there is the disadvantage that the lanthanum oxide tends to react with the active gamma-alumina, thereby forming lanthanum aluminate (Applied Catalysis, 48, 1989, pp. 93-105). In this case the specific surface area of the support is reduced and at the same time the activity of the catalyst is respectively lowered. The said article indeed proposes that, instead of gamma-alumina, there should be used alpha-alumina, which does not react so readily with lanthanum oxide. However, at the same time much is lost in specific surface area, and the activity of the catalyst cannot be the best possible in this case either.

EP-A-0310398 and US-A-4808564 relate to catalysts for treatment of exhaust gases. GB-1398893 relates to a method of treating exhaust gases using a catalyst.

In an investigation of the performance and stability of a palladium + alumina catalyst, it was surprisingly observed that, the performance of the palladium catalyst was improved through the adding of small amounts of europium oxide to a catalyst support comprising lanthanum oxide in addition to alumina. The same result was obtained when a small amount of samarium oxide instead of europium oxide was added to a corresponding catalyst. Ceria, which is generally used for storing oxygen is not needed at all in such a catalyst and, nevertheless, the performance of the catalyst has been very good when the oxygen content has varied below and above the stoichiometric value.

Accordingly, the present invention provides a catalyst for the purification of gasoline engine exhaust gases comprising a catalyst body having numerous through-flow channels for exhaust gas, a support coated on the body and palladium as a catalytically active substance on the surface of the support, wherein the support comprises alumina, in the range of from 10 to 50% by weight lanthanum oxide and additionally in the range of from 0.25 to 2.5 % by weight europium oxide and/or 0.25 to 2.5 % by weight samarium oxide, the percentages by weight being based on the weight of the support.

The catalyst according to the invention may have a ceramic or metallic body, but preferably it has a metallic body.

The alumina contained in the support is preferably gamma-alumina.

If present, the europium oxide content of the support is preferably 0.5-2 % by weight. Respectively, if present, the samarium oxide content of the support is preferably 0.5-2 % by weight.

The lanthanum oxide content of the support is preferably 20-40% by weight.

The Pd content of the catalyst according to the invention is preferably 2-15 g/l of catalyst honeycomb, most preferably 4-13 g/l of catalyst honeycomb.

The invention also provides a method for the preparation of a catalyst for the purification of gasoline engine exhaust gases, wherein a catalyst body material is coated with a support slurry comprising alumina, an oxide or soluble salt of lanthanum and additionally an oxide or soluble salt of one or both of europium and samarium, the body material coated with the support slurry is dried and calcined to form an oxide-containing support, the calcined support is impregnated with a solution comprising a palladium compound, and then the palladium is reduced to metallic palladium, wherein the oxide-containing support comprises alumina, in the range of from 10 to 50% by weight lanthanum oxide and additionally in the range of from 0.25 to 2.5 % by weight europium oxide and/or 0.25 to 2.5 % by weight samarium oxide, the percentages by weight being based on the weight of the support.

The europium and/or samarium may be added to the support slurry either directly in the form of a fine-grained oxide or as a soluble compound which converts to an oxide form in the catalyst preparation process. Respectively, the La may be added to the support slurry either directly in the form of a fine-grained oxide or as a soluble compound which converts to an oxide form in the catalyst preparation process. The soluble compound used may be, for example, a soluble salt, such as a nitrate, chloride or oxalate.

With the catalyst according to the invention, a maximally uniform catalyst surface is obtained, i.e. all the active components are distributed evenly on the surface of the washcoat or in the washcoat, whereby also the catalytic performance dependent on the surface area is maximized.

The performance and activity of the catalyst was measured by using a laboratory test carried out on a synthetic exhaust gas. The composition of this gas corresponded to a typical gasoline engine exhaust gas with respect to the principal components. In the testing, the oxygen concentration of the gas entering the catalyst was pulsed, i.e. it was varied periodically at a frequency of 1 Hz, corresponding to the real situation, on both sides of the stoichiometric oxygen concentration. Thus, variation between oxygen-rich and oxygen-poor exhaust gas was obtained during the test.

Catalyst performance is described by the light-off temperatures of the various gas components, the light-off temperature meaning a 50 % conversion with respect to the said component; by the conversion percentage when the catalyst is at the normal operating temperature (400 °C); and by a performance test carried out at a standard temperature (300 °C) when the oxygen content is varied from an oxygen-poor mixture to an oxygen-rich mixture. Thus a so-called lambda window is obtained between the conversion curves of the oxidized components (CO and HC) and the reduced component (NOₓ). The objective is that the degrees of conversion of all the three components are simultaneously maximally high, and within a maximally wide oxygen concentration range. The height and the width of the lambda window at a certain conversion degree (e.g. all conversions more than 80 %) describe the quality of the catalyst.

The following catalysts were prepared for the testing:

### Example 1 (Reference)

A support slurry was prepared which contained gamma-alumina, lanthanum nitrate, nitric acid and water; both a flat steel foil strip and a corrugated steel foil strip were coated with this slurry. After drying and calcination (temperature 550°C, 4 h), the amount of support on the foil surface was 45 g/m², and the La content of the support was 20 % by weight. The supports of both the flat and the corrugated foils were impregnated with a palladium salt solution so that the Pd content of the catalyst was 6.3 g/l of tightly rolled catalyst having 62 holes/cm². The completed catalyst was reduced at a temperature of 300 °C in a hydrogen + argon gas mixture.

### Example 2 (Reference)

A catalyst was prepared as in Example 1, but to a Pd content of 12.6 g/l.

### Example 3 (A catalyst according to the invention)

A catalyst was prepared as in Example 1, but also europium nitrate was added to the support so that the Eu content in the support of the completed catalyst was 1.0 % by weight. The Pd content was 6.3 g/l.

### Example 4 (A catalyst according to the invention)

A catalyst was prepared as in Example 3, but the Pd content was 12.6 g/l.

### Example 5 (A catalyst according to the invention)

A catalyst was prepared as in Example 1, but samarium nitrate was added to the support so that the Sm content in the support of the completed catalyst was 1.0 % by weight. The Pd content was 6.3 g/l.

### Example 6 (A catalyst according to the invention)

A catalyst was prepared as in Example 5, but the Pd content was 12.6 g/l.

### Example 7 (Reference)

A conventional gasoline engine exhaust gas catalyst was prepared, in which the support contained ceria (22 % by weight Ce), the balance being gamma-alumina, in total 45 g/m². This was impregnated with platinum and rhodium so that the Pt content of the final catalyst was 1.5 g/l and Rh content 0.3 g/l. Finally the catalyst was reduced in a hydrogen+argon mixture at a temperature of 480 °C.

Before the testing, all of the catalysts were further stabilized in real gasoline engine exhaust gas, in which the oxygen concentration was 0.993 x the stoichiometric oxygen concentration. The stabilization time was 6 hours.

In the laboratory testing described above, the results according to the following Table 1 were obtained. The gas components assayed were: carbon monoxide (CO), hydrocarbons (HC), and nitrogen oxides (NOₓ). The height of the lambda window means the highest simultaneous degree of conversion of all the said three components. The lambda width indicates the length of the oxygen concentration range within which the conversion of all of the said components is over 80 %.

The results in Table 1 show that at a Pd level of 6.3 g/l in the catalyst, the light-off values are clearly lowered when europium or samarium has been added to the catalyst. At the same time the conversion values at 400 °C are clearly improved. On the other hand, although the increase in the conversion percentage is slight, for example 98 % -> 99 %, this means that the unconverted gas which has passed through the catalyst has decreased by 50 %.

With respect to the height of the lambda window, no improvement has occurred at a Pd level of 6.3 g/l, but the widening of the lambda window is a factor which has a highly significant effect on the improvement of emission conversions in a situation of oxygen fluctuation.

At a Pd level of 12.6 g/l the light-off values are improved further when europium or samarium has been added to the catalyst. The conversions at 400 °C are also improved, and the values of the lambda window are also clearly improved.

A comparison of the catalysts according to the invention with a normal platinum-rhodium catalyst (Example 7) shows that the Pt-Rh catalyst had a better light-off value in the test. At a normal operating temperature, the lambda window test is to be regarded as the most important part of the test, and with the catalysts according to the invention it is better than with Pt-Rh catalysts, especially the width.

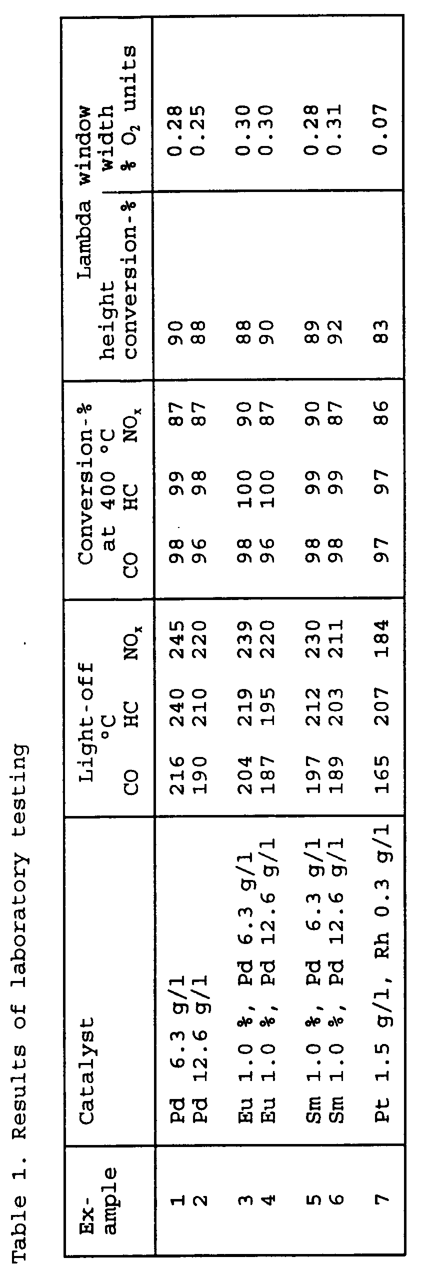

This lambda window width is especially significant for the performance of a catalyst in the real automobile driving situation. In the so-called FTP 75 test, accepted by the USA authorities, depicting a kind of average driving procedure, the results according to Table 2 were obtained with exhaust gas coming from an automobile engine into a full-size catalyst. Ageing was performed on an engine bench by using a so-called thermal ageing cycle. The testing was performed on catalysts according to Examples 4 and 7.

**Table 2**

| Results of FTP 75 test | | | | | | |
|---|---|---|---|---|---|---|
| Ageing time | Emissions after the catalyst (g/km) | | | | | |
| | Example 4 (Pd/Eu) | | | Example 7 (Pt-Rh) | | |
| | CO | HC | NOₓ | CO | HC | NOₓ |
| 8 h | 0.48 | 0.08 | 0.38 | 0.50 | 0.15 | 0.20 |
| 50 h | 0.65 | 0.07 | 0.21 | 0.85 | 0.20 | 0.21 |
| 100 h | 0.85 | 0.13 | 0.45 | 0.85 | 0.22 | 0.28 |

On the basis of the results it can be noted that in this test the hydrocarbon emissions of the catalyst according to the invention were much lower than the hydrocarbon emissions of a conventional Pt-Rh catalyst. The carbon monoxide values were also better with the catalyst according to the invention, but the emissions of nitrogen oxides higher than or equal to those with a Pt-Rh catalyst.

The full-size engine tests are the most important in the development of catalyst systems for various automobiles. However, their results cannot be generalized, since the exhaust gases of different automobiles differ from each other. In addition to activity, also the size of the catalyst is highly important in terms of the purification efficacy. The optimal adaptation of a catalyst and an automobile engine together usually requires the development work of several years. Thus it is understandable that the results in Table 2 are only indicative. The NOₓ result can probably be improved by decreasing the oxygen concentration of the exhaust gas.

In the tests referred to above, an Eu or Sm content of 1.0 % was used in the catalyst support. On the basis of the experience obtained, a usable content range is 0.25 - 2.5 %, most preferably 0.1-2.0 %. Even higher Eu/Sm contents are possible, but in that case their share in the cost of the catalyst is considerably high.

On the basis of the tests, a Pd catalyst according to the invention, containing La oxide and additionally europium or samarium oxide, is as a whole better than the conventional Pt-Rh catalyst. The addition of europium or samarium to the catalyst has clearly improved the performance of the catalyst. The additions were in the form of a nitrate, but it is clear that the addition may also be in the form of an oxide or some other compound, such as a chloride or an oxalate, which is converted into the corresponding oxide at the high temperature of the calcination stage of the catalyst preparation process.

Considering the general similarity of the chemical behavior of Eu and Sm and the similarity of the performance of the Eu-containing and Sm-containing catalysts described above, it is evident that, in addition to the separate Eu-containing and Sm-containing catalysts, their effect would be the same if these compounds were simultaneously present in a catalyst.

## Claims

1. A catalyst for the purification of gasoline engine exhaust gases comprising a catalyst body having numerous through-flow channels for exhaust gas, a support coated on the body and palladium as a catalytically active substance on the surface of the support, wherein the support comprises alumina, in the range of from 10 to 50 % by weight lanthanum oxide and additionally in the range of from 0.25 to 2.5 % by weight europium oxide and/or in the range of from 0.25 to 2.5 % by weight samarium oxide, the percentages by weight being based on the weight of the support.

2. A catalyst according to claim 1, wherein the europium oxide content in the support is in the range of from 0.5 to 2 % by weight.

3. A catalyst according to claim 1 or claim 2, wherein the samarium oxide content in the support is in the range of from 0.5 to 2 % by weight.

4. A catalyst according to any one of claims 1 to 3, wherein the lanthanum oxide content in the support is in the range of from 20 to 40 % by weight.

5. A catalyst according to any one of claims 1 to 4, wherein the Pd content is in range of from 2 to 15 g/l of catalyst honeycomb, preferably in the range of from 4 to 13 g/l of catalyst honeycomb.

6. A method for the preparation of a catalyst for purifying gasoline engine exhaust gas, wherein a catalyst body material is coated with a support slurry comprising alumina, an oxide or soluble salt of lanthanum and additionally an oxide or soluble salt of one or both of europium and samarium, the body material coated with the support slurry is dried and calcined to form an oxide-containing support, the calcined support is impregnated with a solution comprising a palladium compound, and then the palladium is reduced to metallic palladium, wherein the oxide-containing support comprises alumina, in the range of from 10 to 50 % by weight lanthanum oxide and additionally in the range of from 0.25 to 2.5 % by weight europium oxide and/or in the range of from 0.25 to 2.5 % by weight samarium oxide, the percentages by weight being based on the weight of the support.

7. A method according to claim 6, wherein the soluble salts comprise a nitrate, chloride or oxalate.

8. A method according to claim 6 or claim 7, wherein the europium oxide content in the support is in the range of from 0.5 to 2 % by weight.

9. A method according to any one of claims 6 to 8, wherein the samarium oxide content in the support is in the range of from 0.5 to 2 % by weight.

10. A method according to any one of claims 6 to 9, wherein the lanthanum oxide content in the support is in the range of from 20 to 40 % by weight.

## Patentansprüche

1. Katalysator für die Reinigung von Benzinmotorabgasen, der einen Katalysatorkörper mit zahlreichen Durchlaufkanälen für Abgas, einen auf dem Körper aufgebrachten Träger und Palladium als katalytisch aktive Substanz auf der Oberfläche des Trägers umfaßt, bei dem der Träger Aluminiumoxid, Lanthanoxid im Bereich von 10 bis 50 Gew.-% und zusätzlich Europiumoxid im Bereich von 0,25 bis 2,5 Gew.-% und/oder Samariumoxid im Bereich von 0,25 bis 2,5 Gew.-% umfaßt, wobei die Gewichtsprozentsätze auf dem Gewicht des Trägers basieren.

2. Katalysator gemäß Anspruch 1, bei dem der Europiumoxidgehalt im Träger im Bereich von 0,5 bis 2 Gew.-% liegt.

3. Katalysator gemäß Anspruch 1 oder 2, bei dem der Samariumoxidgehalt im Träger im Bereich von 0,5 bis 2 Gew.-% liegt.

4. Katalysator gemäß einem der Ansprüche 1 bis 3, bei dem der Lanthanoxidgehalt im Träger im Bereich von 20 bis 40 Gew.-% liegt.

5. Katalysator gemäß einem der Ansprüche 1 bis 4, bei dem der Pd-Gehalt im Bereich von 2 bis 15 g/l Katalysatorwabe, vorzugsweise im Bereich von 4 bis 13 g/l Katalysatorwabe liegt.

6. Verfahren zur Herstellung eines Katalysators für die Reinigung von Benzinmotorabgas, bei dem ein Katalysatorkörpermaterial mit einer Trägeraufschlämmung, die Aluminiumoxid, ein Oxid oder lösliches Salz von Lanthan und zusätzlich ein Oxid oder lösliches Salz von einem oder beiden von Europium und Samarium umfaßt, beschichtet wird, das mit der Trägeraufschlämmung beschichtete Körpermaterial getrocknet und geglüht wird, um einen oxidhaltigen Träger zu bilden, der geglühte Träger mit einer Lösung, die eine Palladiumverbindung enthält, imprägniert wird, und dann das Palladium zu metallischem Palladium reduziert wird, bei dem der oxidhaltige Träger Aluminiumoxid, Lanthanoxid im Bereich von 10 bis 50 Gew-% und zusätzlicn Europiumoxid im Bereich von 0,25 bis 2,5 Gew`-% und/oder Samariumoxid im Bereich von 0,25 bis 2,5 Gew.-% umfaßt wobei die Gewichtsprozentsätze auf dem Gewicht das Trägers basieren.

7. Verfahren gemäß Anspruch 6, bei dem die löslichen Salze ein Nitrat, Chlorid oder Oxalat umfassen.

8. Verfahren gemäß Anspruch 6 oder 7, bei dem der Europiumoxidgehalt im Träger im Bereich von 0,5 bis 2 Gew.-% liegt.

9. Verfahren gemäß einem der Ansprüche 6 bis 8, bei dem der Samariumoxidgehalt im Träger im Bereich von 0,5 bis 2 Gew.-% liegt.

10. Verfahren gemäß einem der Ansprüche 6 bis 9, bei dem der Lanthanoxidgehalt im Träger im Bereich von 20 bis 40 Gew.-% liegt.

## Revendications

1. Catalyseur pour la purification des gaz d'échappement des moteurs à essence, comprenant un corps catalyseur ayant un grand nombre de canaux traversants destinés au gaz d'échappement, un support appliqué sur le corps, et du palladium en tant que matière catalytiquement active sur la surface du support, où le support comprend de l'alumine, une quantité de 10 à 50 % en poids d'oxyde de lanthane, et de plus une quantité de 0,25 à 2,5 % en poids d'oxyde d'europium et/ou une quantité de 0,25 à 2,5 % en poids d'oxyde de samarium, les pourcentages en poids étant rapportés au poids du support.

2. Catalyseur selon la revendication 1, dans lequel la teneur du support en oxyde d'europium est comprise entre 0,5 et 2 % en poids.

3. Catalyseur selon la revendication 1 ou 2, dans lequel la teneur du support en oxyde de samarium est comprise entre 0,5 et 2 % en poids.

4. Catalyseur selon la revendication 1 à 3, dans lequel la teneur du support en oxyde de lanthane est comprise entre 20 et 40 % en poids.

5. Catalyseur selon l'une quelconque des revendications 1 à 4, dans lequel la teneur en Pd est comprise entre 2 et 15 g/l de catalyseur en nid d'abeilles, de préférence entre 4 et 13 g/l de catalyseur en nid d'abeilles.

6. Procédé pour préparer un catalyseur destiné à purifier les gaz d'échappement d'un moteur à essence, où on applique sur un matériau de corps de catalyseur une suspension-support comprenant de l'alumine, un oxyde ou un sel soluble de lanthane, et de plus un oxyde ou un sel soluble de l'europium, ou du samarium, ou des deux, le matériau du corps, revêtu de la suspension-support, est séché et calciné pour donner un support contenant un oxyde, le support calciné est imprégné d'une solution comprenant un composé du palladium, puis le palladium est réduit en palladium métallique, où le support contenant l'oxyde comprend de l'alumine, une quantité de 10 à 50 % en poids d'oxyde de lanthane et de plus une quantité de 0,25 à 2,5 % en poids d'oxyde d'europium et/ou une quantité de 0,25 à 2,5 % en poids d'oxyde de samarium, les pourcentages en poids étant rapportés au poids du support.

7. Procédé selon la revendication 6, dans lequel les sels solubles comprennent un nitrate, un chlorure ou un oxalate.

8. Procédé selon la revendication 6 ou 7, dans lequel la teneur du support en oxyde d'europium est comprise entre 0,5 et 2 % en poids.

9. Procédé selon l'une quelconque des revendications 6 à 8, dans lequel la teneur du support en oxyde de samarium est comprise entre 0,5 et 2 % en poids.

10. Procédé selon l'une quelconque des revendications 6 à 9, dans lequel la teneur du support en oxyde de lanthane est comprise entre 20 et 40 % en poids.
